# EUROPÄISCHE PATENTSCHRIFT

(11) **EP 2 830 842 B1**
(45) Veröffentlichungstag und Bekanntmachung des Hinweises auf die Patenterteilung: **10.08.2016**
(21) Anmeldenummer: 13711359.3
(22) Anmeldetag: 21.03.2013
(51) Int. Cl.: B29B 7/74, B29B 7/90, B29B 15/10, B29C 67/24, B29C 70/30

(54) **VORRICHTUNG UND VERFAHREN ZUM AUFBRINGEN EINES AUS WENIGSTENS ZWEI KOMPONENTEN BESTEHENDEN REAKTIVEN GEMISCHES AUF EIN TRÄGERMATERIAL**
DEVICE AND METHOD FOR APPLYING A REACTIVE MIXTURE CONSISTING OF AT LEAST TWO COMPONENTS TO A SUBSTRATE
DISPOSITIF ET PROCÉDÉ DESTINÉS À APPLIQUER SUR UN MATÉRIAU SUPPORT UN MÉLANGE RÉACTIF CONSTITUÉ D'AU MOINS DEUX COMPOSANTS

(30) Priorität: 27.03.2012 DE 102012006048
(43) Veröffentlichungstag der Anmeldung: 04.02.2015
(60) Teilanmeldung: 16175868.5
(73) Patentinhaber: KraussMaffei Technologies GmbH, 80997 München (DE)
(72) Erfinder: SCHEIDT, Ernst, 85221 Dachau (DE); RENKL, Josef, 85229 Markt Indersdorf (DE)
(74) Vertreter: Roider, Stephan
(86) Internationale Anmeldenummer: PCT/EP2013/055876
(87) Internationale Veröffentlichungsnummer: WO 2013/143956

(56) Entgegenhaltungen:
- EP-A1- 2 163 368
- EP-A1- 2 345 530
- DE-A1- 10 320 341
- DE-A1-102009 007 703
- DE-B8-102004 021 544
- US-A1- 2003 017 335

## Beschreibung

Die Erfindung betrifft eine Vorrichtung und ein Verfahren zum Aufbringen eines aus wenigstens zwei Komponenten bestehenden, reaktiven Gemisches auf ein Trägermaterial.

Bei der Herstellung von Verbundbauteilen, beispielsweise von faserverstärkten Produkten, ist es bekannt, Fasermatten auf ein Werkstück auf- oder in eine Form einzulegen und anschließend mit einem Kunststoffmaterial zu beschichten. Derartige Verfahren sind in letzter Zeit beispielsweise unter dem Namen "Baypreg-Technologie" bekannt geworden. Diesbezüglich wird beispielsweise auf die DE 10 2009 007 703 A1 verwiesen.

Beispielsweise offenbart die EP 2 345 530 A1 eine Vorrichtung mit zwei Polyurethan-Mischköpfen. Der erste Mischkopf weist eine Sprühdüse auf, die das Reaktionsgemisch in Form eines Sprühkegels ausbringt, der eine Breite besitzt, welche der Bereite des Faserbandes entspricht. Der zweite Mischkopf weist eine Sprühvorrichtung auf, die einen Sprühstrahl erzeugt, dessen Sprühstrahlbreite ebenfalls der Breite des Faserbandes entspricht.

Ergänzend wird noch auf die DE 10 320341 A1 und die DE 10 2004 021544 A1 verwiesen.

Zum Auftragen des Kunststoffmaterials, welches beispielsweise ein Polyurethan-Material sein kann, kommen üblicherweise Sprühköpfe zum Einsatz, die einen runden Sprühstrahl erzeugen. Zusätzlich kann die Möglichkeit geschaffen sein, dem Kunststoffmaterial Fasern beizumischen, um eine Verstärkungswirkung zu erzielen. Je nachdem, ob also ein reiner Kunststoffmaterialauftrag oder ein mit Fasern versetzter Kunststoffauftrag für eine partielle Verstärkung des zu beschichtenden Bauteils gewünscht ist, können dann während des Sprühens zusätzlich Fasern beigeben werden. Das Einbringen der Fasern geschieht dabei üblicherweise durch seitliches Einbringen in den Sprühstrahl. Genauer gesagt ist ein separater Faserstrahl vorgesehen, der auf den Kunststoffsprühstrahl gerichtet ist. Die zur Erzeugung des Sprühstrahls üblicherweise verwendeten Rundstrahldüsen haben den Nachteil, dass sie nur einen relativ kleinen Sprühwinkel haben und das Besprühen von großflächigen Teilen zu sehr langen Zykluszeiten führt. Zwar lässt sich durch eine entsprechende Luftzufuhr Einfluss auf den Sprühwinkel nehmen, dies hat allerdings zur Folge, dass ein erhöhter Sprühnebel entsteht. Durch die Erzeugung eines erhöhten bzw. feineren Sprühnebels kommt es jedoch zu einem stärkeren Materialverlust und zu einer stärkeren Verschmutzung der Umgebung. Dies resultiert insgesamt in erhöhten Kosten und einem erhöhten Wartungsaufwand.

Aufgabe der Erfindung ist es daher, eine Vorrichtung und ein Verfahren zum Aufbringen eines aus wenigstens zwei Komponenten bestehenden, reaktiven Gemisches auf ein Trägermaterial zu schaffen, die bzw. das die oben genannten Nachteile vermeidet.

Diese Aufgabe wird vorrichtungsgemäß durch die im Anspruch 1 angegebenen Merkmale und verfahrensmäßig durch die im Anspruch 6 angegebenen Merkmale gelöst. Vorteilhafte Weiterbildungen sind Gegenstand der abhängigen Ansprüche.

Erfindungsgemäß ist die Vorrichtung zum Aufbringen des aus wenigstens zwei Komponenten bestehenden, reaktiven Gemisches mit einer Sprüheinrichtung versehen, die zur Erzeugung eines flachen, fächerartigen Sprühstrahls und eines im Wesentlichen runden Sprühstrahls in der Lage ist.

Die Vorrichtung ist dabei derart ausgebildet und angepasst, dass die Sprüheinrichtung in wenigstens zwei Durchgängen über das Trägermaterial bewegt wird, wobei in einem ersten Durchgang mit dem flachen, fächerartigen Sprühstrahl ein erster Materialauftrag mit reaktivem Gemisch auf das Trägermaterial erfolgt und anschließend in einem zweiten Durchgang mit dem runden Sprühstrahl ein weiterer Materialauftrag mit reaktivem Gemisch auf zumindest einem Teil des bei dem ersten Materialauftrag auf das Trägermaterial aufgebrachten Materials erfolgt. Dazu hat die Vorrichtung ein Mittel, welches eine Relativbewegung zwischen dem Trägermaterial und der Sprüheinrichtung bewirken kann. Ein solches Mittel kann beispielsweise ein Roboter sein, an dem die Sprüheinrichtung angebracht ist. Der Roboter bewegt dann beispielsweise die Sprüheinrichtung in mehreren Durchgängen über das Trägermaterial. Denkbar wäre jedoch auch eine Anordnung, bei der das Trägermaterial beweglich, beispielsweise an einem Roboter, angeordnet und die Sprüheinrichtung ortsfest angeordnet ist. Auch ist eine Kombination denkbar, bei der sowohl Trägermaterial als auch Sprüheinrichtung beweglich angeordnet sind. Das Bewegen der Sprüheinrichtung über das Trägermaterial ist also nicht nur als reines Bewegen der Sprüheinrichtung selbst zu verstehen, sondern soll sämtliche Ausgestaltungen umfassen, bei denen eine Verlagerung des Auftragsbereichs von reaktivem Gemisch auf dem Trägermaterial erfolgt.

Dieser Aufbau der Vorrichtung hat mehrere Vorteile. Durch die Verwendung des flachen, fächerartigen Sprühstrahls ist es möglich, einen großflächigen Auftrag mit einer hohen Menge vorzunehmen. Dabei können je nach Düsentyp große Sprühbreiten, beispielsweise bis zu 800 mm, erreicht werden. Des Weiteren ermöglicht die Verwendung eines flachen, fächerartigen Sprühstrahls ein sehr genaues Besprühen des Trägermaterials, wodurch es kaum zu einem ungewünschten Hinaussprühen über den zu beschichtenden Bereich kommt. Außerdem kann eine große Fläche des Trägermaterials in sehr kurzer Zeit besprüht werden. Für die meisten Bauteile wird im ersten Durchgang sogar ein einmaliges Überfahren des Trägermaterials ausreichen, um die zu beschichtende Fläche vollständig mit Material zu besprühen. Um gezielte Materialanhäufungen auf dem Trägermaterial zu erzeugen, wird in dem zweiten Durchgang ein runder Sprühstrahl verwendet. Dadurch ist es möglich, in genau definierten Bereichen des Bauteils mehr Material für eine partielle Verstärkung vorzusehen. Insgesamt kann somit durch die Bereitstellung unterschiedlicher Sprühstrahlarten in einer Sprüheinrichtung eine Verkürzung der Zykluszeit erreicht werden.

Um die vorstehenden Sprühstrahlarten zu erzeugen, hat die Sprüheinrichtung einen mit einer Flachstrahldüse versehenen ersten Mischkopf zur Erzeugung des flachen, fächerartigen Sprühstrahls und einen mit einer Rundstrahldüse versehenen zweiten Mischkopf zur Erzeugung des runden Sprühstrahls. Diese Anordnung hat den Vorteil, dass die Leistung eines jeden Mischkopfes optimal an den zu erzeugenden Sprühstrahl angepasst ist.

Des Weiteren kann der den runden Sprühstrahl erzeugende zweite Mischkopf mit einer Faserzudosierung, vorteilhafterweise einer zur Sprührichtung koaxialen Faserzudosierung versehen sein. Dadurch ist es möglich, dem runden Sprühstrahl wahlweise Fasern zuzugeben, wodurch es wiederum ermöglicht wird, auf dem Trägermaterial lokale, mit Fasern verstärkte Bereiche zu erzeugen.

Es ist vorteilhaft, wenn die Vorrichtung ferner eine an der Sprüheinrichtung angebrachte Faserschneidanlage aufweist. Durch eine derartige Anordnung ist es möglich, den Fasertransportweg zwischen der Faserschneidanlage und dem zweiten Mischkopf so kurz wie möglich zu halten.

Die vorstehend beschriebene Vorrichtung kann eine spezielle Aufnahmeeinrichtung zum Aufnehmen des Trägermaterials aufweisen, mit der eine Lageänderung, insbesondere ein Wenden, des Trägermaterials möglich ist. Bei der Aufnahmeeinrichtung kann es sich beispielsweise um einen Rahmen handeln, in den das Trägermaterial eingespannt ist. Dieser Rahmen kann dann um eine Achse drehbar gehalten sein, wodurch ein Wenden des Trägermaterials und damit ein beidseitiges Besprühen des Trägermaterials möglich ist. Denkbar ist jedoch auch die Anbringung eines derartigen Rahmens an einem Roboter, der den Rahmen dann frei Bewegen und ebenfalls wenden kann. Es ist jedoch auch möglich, das Material einseitig zu besprühen, während es zunächst auf einer Auflage liegt. Zum Besprühen der anderen Seite kann dann beispielsweise ein Roboter mit Nadelgreifer das Trägermaterial aufnehmen und entsprechend positionieren.

Das erfindungsgemäße Verfahren zum Aufbringen des reaktiven Gemisches hat einen ersten Schritt, bei dem mit einer Sprüheinrichtung mit einem flachen, fächerartigen Sprühstrahl ein erster Materialauftrag mit reaktivem Gemisch auf das Trägermaterial erfolgt. Anschließend erfolgt mit der Sprüheinrichtung in einem weiteren Schritt ein weiterer Gemischauftrag mit reaktivem Gemisch mit einem im Wesentlichen runden Sprühstrahl auf zumindest einem Teil des bei dem ersten Gemischauftrag auf das Trägermaterial aufgebrachten Materials. Die Sprüheinrichtung gestattet somit einen Wechsel zwischen einem flachen und einem runden Sprühstrahl, wobei die Vorteile beider Sprühstrahlarten optimal ausgenutzt werden können.

Die Reihenfolge, in welcher die Sprüheinrichtung im Fertigungsprozess den flachen, fächerartigen Sprühstrahl und den im Wesentlichen runden Sprühstrahl erzeugt, ist abhängig von der Art des zu fertigenden Bauteils und kann beliebig variiert werden.

In dem zweiten Schritt können dem Gemisch bzw. dem Sprühstrahl Fasern zudosiert werden. Die Zudosierung kann dabei während des Sprühens durchgehend oder aber auch nur zeitweise vorgenommen werden.

Vorzugsweise wird die Sprüheinrichtung über das Trägermaterial bewegt. So ist es beispielsweise möglich, bei einem Überfahren des Trägermaterials in einer Richtung einen großflächigen Materialauftrag unter Verwendung des flachen Sprühstrahls vorzunehmen und anschließend bei einem Überfahren des Trägermaterials in entgegengesetzter Richtung unter Verwendung des runden Sprühstrahls einen gezielten, zusätzlichen ggf. mit Fasern versehenen Materialauftrag vorzunehmen.

Des Weiteren ist es wünschenswert, dass der zweite Schritt unmittelbar nachfolgend an den ersten Schritt erfolgt, so dass das im ersten Schritt aufgebrachte Material noch nicht auszuhärten beginnt.

Das vorstehend beschriebene Verfahren kann vorteilhafterweise zur Herstellung eines Verbundbauteils verwendet werden. Bei einem solchen Verfahren wird zunächst ein Trägermaterial bereitgestellt. Anschließend wird das reaktive Gemisch mit dem vorstehend beschriebenen Verfahren auf einer Seite des Trägermaterials aufgebracht. Anschließend kann dann das Trägermaterial in eine Form umgesetzt werden, in der dann das aufgebrachte Material aushärtet. Es ist jedoch auch möglich, das Trägermaterial bereits in einer Form bereitzustellen und das reaktive Gemisch auf das in der Form befindliche Trägermaterial aufzubringen.

Überdies ist es bei dem Verfahren zum Herstellen des Verbundbauteils auch möglich, das Trägermaterial im Anschluss an das Aufbringen des Gemisches auf einer Seite des Trägermaterials zu wenden. Dann kann auf der anderen Seite des Trägermaterials mit dem vorstehend beschriebenen Verfahren ebenfalls ein Materialauftrag erfolgen.

Wünschenswerterweise wird als das Trägermaterial eine Verstärkungsstruktur verwendet. Dies kann beispielsweise eine faserige Verstärkungsstruktur wie eine Fasermatte oder dergleichen sein.

Weitere Vorteile, Merkmale und Einzelheiten der Erfindung ergeben sich aus der nachfolgenden Beschreibung eines bevorzugten Ausführungsbeispiels sowie anhand der Zeichnungen. Dabei zeigen;
- Fig. 1: eine Draufsicht eines mit dem erfindungsgemäßen Verfahren besprühten Trägermaterials und
- Fig. 2: einen schematischen Aufbau einer Vorrichtung zum Aufbringen eines reaktiven Gemisches auf das Trägermaterial, wobei der Aufbau in Seitenansicht gezeigt ist und das besprühte Trägermaterial in Schnittansicht entlang der Linie A-A in Fig. 1 gezeigt ist.

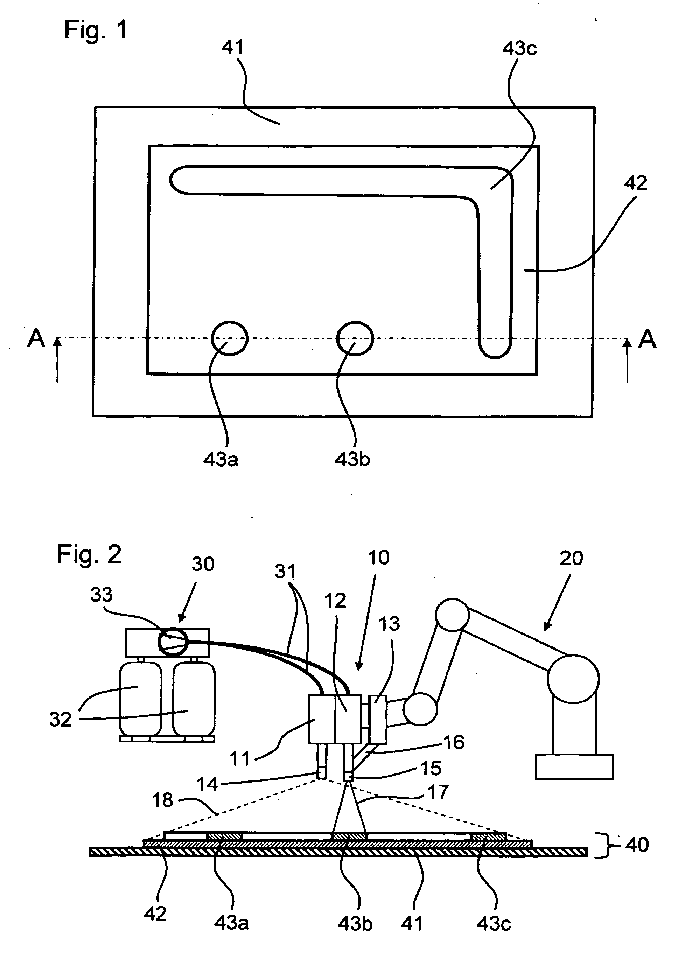

Das in Fig. 1 gezeigte Trägermaterial 41 ist im vorliegenden Ausführungsbeispiel eine rechteckige Fasermatte. Auf dieser Fasermatte 41 ist eine im Wesentlichen rechteckige Fläche mit einem Polyurethan-Material 42 besprüht. Das aufgesprühte Polyurethan-Material 42 dringt in die Fasermatte ein. Auf der mit dem Polyurethan-Material 42 besprühten Fläche sind weitere Materialaufträge in Form eines ersten kreisförmigen Materialauftrags 43a, eines zweiten kreisförmigen Materialauftrags 43b sowie ein im Wesentlichen L-förmiger Materialauftrag 43c vorgesehen. Bei diesen weiteren Materialaufträgen handelt es sich ebenfalls um ein Polyurethan-Material, wobei dieses im vorliegenden Fall mit Fasern vermengt ist. Die derart besprühte Fasermatte kann anschließend zum Aushärten in eine Form eingebracht werden. Vor oder nach dem Aushärten des Materials wird der über den Bereich 42 hinausgehende Teil der Fasermatte 41 abgetrennt, so dass im Ergebnis das gewünschte Verbundbauteil erhalten wird.

In Fig. 2 ist eine erfindungsgemäße Vorrichtung zum Aufbringen von reaktivem Gemisch auf das in Figur 1 gezeigte Trägermaterial gezeigt. Die Vorrichtung besteht im Wesentlichen aus einem Roboter 20, an dem eine Sprüheinrichtung 10 zum Aufbringen des reaktiven Gemisches befestigt ist, einer Komponentenzufuhr 30, die die Einzelkomponenten des zu erzeugenden reaktiven Gemisches bevorratet und der Sprüheinrichtung 10 zuführt, und einer nicht gezeigten Aufnahmeeinrichtung, die das Trägermaterial aufnehmen kann. Die Sprüheinrichtung 10 hat einen ersten Mischkopf 11 und einen zweiten Mischkopf 12. Der erste Mischkopf 11 ist mit einer Flachstrahldüse 14 versehen, die einen flachen, fächerartigen Sprühstrahl 18 erzeugt. Der zweite Mischkopf 12 ist mit einer Rundstrahldüse 15 zum Erzeugen eines runden Sprühstrahls 17 versehen. Neben dem Mischkopf 12 ist eine Faserschneidanlage 13 angeordnet. Die Faserschneidanlage 13 ist über ein Rohr 16 mit dem zweiten Mischkopf 12 verbunden. Die Komponentenzufuhr 30 hat mehrere Behälter 32 zum Bevorraten der einzelnen Komponenten des zu erzeugenden reaktiven Gemisches und eine Pumpe 33, die die einzelnen Komponenten aus den jeweiligen Behältern entnehmen und Druckbeaufschlagen kann. Die Pumpe 33 ist über Leitungen 31 mit dem ersten Mischkopf 11 und dem zweiten Mischkopf 12 verbunden und führt dem jeweiligen Mischkopf je nach Bedarf entsprechende Komponentenmengen zu.

In Fig. 2 ist die besprühte Fasermatte 41, wie bereits vorstehend erwähnt, im Schnitt entlang der Linie A-A von Fig. 1 gezeigt. Dabei ist zu berücksichtigen, dass diese Figur lediglich der schematischen Veranschaulichung des Auftrags bzw. Aufsprühens der Kunststoffmaterialien dienen soll. Insbesondere der Materialauftrag 42 wird bei Verwendung einer Fasermatte in diese zumindest teilweise eindringen. Dies ist jedoch hier nicht dargestellt.

Das Aufbringen der einzelnen Materialschichten gestaltet sich wie folgt. Zunächst erfolgt in einem ersten Durchgang der Auftrag des Materials 42 auf die Fasermatte 41. Dazu wird die Sprüheinrichtung 10 durch den Roboter 20 an das in Fig. 1 unten gezeigte Ende der Fasermatte 41 bewegt. Die Komponentenzufuhr 30 führt dann dem Mischkopf 11 die gewünschten Komponenten in vorbestimmter Menge zu und in dem Mischkopf 11 findet eine Vermischung der Komponenten statt. Aus dem Mischkopf 11 erfolgt dann ein Materialaustrag durch die Flachstrahldüse 14, wobei die Vorrichtung dabei gleichmäßig über die Fasermatte 41 bewegt wird. Durch Verwendung der Flachstrahldüse 14 kann somit durch einfaches Überfahren der Fasermatte 41 ein großer Teil von dieser mit Material besprüht werden. Dann wird der erste Materialauftrag beendet, indem die Komponentenzufuhr zu dem ersten Mischkopf 11 gestoppt bzw. der Mischkopf 11 in einen Komponentenzirkulationszustand gebracht wird. Unmittelbar im Anschluss an diesen Materialauftrag erfolgt ein weiterer Materialauftrag mit dem mit der Rundstrahldüse 15 versehenen zweiten Mischkopf 12. In einem zweiten Durchgang wird nun auf das im vorherigen Durchgang aufgebrachte Material 42 teilweise ein weiterer Materialauftrag vorgenommen. Wie dies aus Fig. 1 ersichtlich ist, erfolgt ein Teil des zweiten Materialauftrags 43c L-förmig und erfolgen weitere Materialaufträge 43a, 43b in Kreisform. Das in diesem zweiten Durchgang verwendete Material kann ein reines Polyurethangemisch oder zusätzlich ein mit Fasern versetztes Polyurethan-Material sein. Durch diesen gezielten zweiten Materialauftrag können Verstärkungsstellen an dem Bauteil vorgesehen werden.

### Bezugszeichenliste

- 10: Sprüheinrichtung
- 11: Erster Mischkopf
- 12: Zweiter Mischkopf
- 13: Faserschneidanlage
- 14: Flachstrahldüse
- 15: Rundstrahldüse
- 16: Rohr
- 17: Runder Sprühstrahl
- 18: Flacher, fächerartiger Sprühstrahl
- 20: Roboter
- 30: Komponentenzufuhr
- 31: Leitungen
- 32: Behälter
- 33: Pumpe
- 40: Beschichtetes Trägermaterial
- 41: Trägermaterial
- 42: Erster Materialauftrag
- 43a: Weiterer Materialauftrag
- 43b: Weiterer Materialauftrag
- 43c: Weiterer Materialauftrag

## Patentansprüche

1. Vorrichtung zum Aufbringen eines aus wenigstens zwei Komponenten bestehenden, reaktiven Gemisches auf ein Trägermaterial (41), mit einer Sprüheinrichtung (10), die zur Erzeugung eines flachen, fächerartigen Sprühstrahls (18) und eines im Wesentlichen runden Sprühstrahls (17) in der Lage ist, und einem Mittel zum Bewegen der Sprüheinrichtung (10) relativ zu dem Trägermaterial (41) in wenigstens zwei Durchgängen über das Trägermaterial (41), wobei die Sprüheinrichtung (10) einen mit einer Flachstrahldüse (14) versehenen ersten Mischkopf (12) zur Erzeugung des flachen, fächerartigen Sprühstrahls für einen ersten Materialauftrag (42) mit reaktivem Gemisch auf das Trägermaterial (41) und einen mit einer Rundstrahldüse (15) versehenen zweiten Mischkopf (11) zur Erzeugung des runden Sprühstrahls (17) für einen zweiten Materialauftrag (43a, 43b, 43c) mit reaktivem Gemisch auf das Trägermaterial (41) aufweist, wobei die Rundstrahldüse (15) derart ausgebildet ist, dass der zweite Materialauftrag (43a, 43b, 43c) mit reaktivem Gemisch auf zumindest einen Teil des bei dem ersten Materialauftrag (42) auf das Trägermaterial (41) aufgebrachten Materials (42) realisierbar ist.

2. Vorrichtung nach Anspruch 1, wobei der zweite Mischkopf (11) mit einer koaxialen Faserzudosierung versehen ist.

3. Vorrichtung nach Anspruch 2, wobei die Vorrichtung ferner eine an der Sprüheinrichtung angebrachte Faserschneidanlage (13) aufweist.

4. Vorrichtung nach einem der vorhergehenden Ansprüche,
wobei das Mittel zum Bewegen der Sprüheinrichtung (10) ein Roboter (20) ist.

5. Vorrichtung nach einem der vorhergehenden Ansprüche, ferner mit einer Aufnahmeeinrichtung zum Aufnehmen des Trägermaterials (41), wobei die Aufnahmeeinrichtung derart ausgebildet ist, dass eine Lageänderung, insbesondere ein Wenden des Trägermaterials (41) möglich ist, so dass ein beidseitiger Materialauftrag auf das Trägermaterial (41) möglich ist.

6. Verfahren zum Aufbringen eines aus wenigstens zwei Komponenten bestehenden, reaktiven Gemisches auf ein Trägermaterial (41), wobei mit einer Sprüheinrichtung (10) in einem ersten Schritt mit einem flachen, fächerartigen Sprühstrahl ein erster Materialauftrag (42) mit reaktivem Gemisch auf das Trägermaterial (41) erfolgt und anschließend in einem weiteren Schritt mit einem im Wesentlichen runden Sprühstrahl (17) ein weiterer Gemischauftrag (43a, 43b, 43c) mit reaktivem Gemisch auf zumindest einen Teil des bei dem ersten Gemischauftrag auf das Trägermaterial (41) aufgebrachten Materials (42) erfolgt.

7. Verfahren nach Anspruch 6, wobei dem Gemisch in dem zweiten Schritt Fasern zudosiert werden.

8. Verfahren nach einem der Ansprüche 6 oder 7, wobei der zweite Schritt unmittelbar nachfolgend an den ersten Schritt erfolgt, so dass das im ersten Schritt aufgebrachte Material (42) noch nicht auszuhärten beginnt.

9. Verfahren nach einem der Ansprüche 6 bis 8, wobei als Trägermaterial (41) eine Verstärkungsstruktur verwendet wird.

## Claims

1. A device for applying a reactive mixture consisting of at least two components to a substrate (41), with a spraying device (10), which is able to generate a planar, fan-shaped spray jet (18), and a substantially round spray jet (17), and a means for the movement of the spraying device (10) relative to the substrate (41) in at least two stages over the substrate (41), wherein the spraying device (10) has a first mixing head (12) provided with a planar jet nozzle (14) for the generation of the planar, fan-shaped spray jet for a first application of material (42) with reactive mixture onto the substrate (41), and a second mixing head (11) provided with a round jet nozzle (15) for the generation of the round spray jet (17) for a second application of material (43a, 43b, 43c) with reactive mixture onto the substrate (41), wherein the round jet nozzle (15) is constructed such that the second application of material (43a, 43b, 43c) with reactive mixture is able to be realized onto at least a section of the material applied onto the substrate (41) in the first application of material (42).

2. The device according to Claim 1, wherein the second mixing head (11) is provided with a coaxial fibre feed.

3. The device according to Claim 2, wherein the device furthermore has a fibre cutting facility (13) that is fitted to the spraying device.

4. The device according to one of the preceding claims, wherein the means for moving the spraying device (10) is a robot (20).

5. The device according to one of the preceding claims, furthermore with a reception unit for purposes of receiving the substrate (41), wherein the reception unit is designed such that an alteration in position, in particular a turning, of the substrate (41) is possible, so that an application of material onto the substrate (41) is possible on both sides.

6. A method for the application of a reactive mixture consisting of at least two components onto a substrate (41), wherein with a spraying device (10) in a first step a first application of material (42) with reactive mixture takes place with a planar, fan-shaped spray jet onto the substrate (41), and subsequently in a further step a further application of mixture (43a, 43b, 43c) with reactive mixture takes place with a substantially round spray jet (17) onto at least a section of the material (42) applied onto the substrate (41) in the first application of mixture.

7. The method according to Claim 6, wherein in the second step fibres are fed to the mixture.

8. The method according to one of Claims 6 or 7, wherein the second step takes place immediately following the first step so that the material (42) applied in the first step has not yet begun to harden.

9. The method according to one of Claims 6 to 8, wherein a reinforcing structure is used as substrate (41).

## Revendications

1. Dispositif destiné à appliquer sur un matériau support (41) un mélange réactif constitué d'au moins deux composants, comprenant un dispositif de pulvérisation (10) qui est capable de produire un jet pulvérisé (18) plat en éventail et un jet pulvérisé (17) essentiellement rond, et un moyen pour déplacer le dispositif de pulvérisation (10) par rapport au matériau support (41) dans au moins deux passages sur le matériau support (41), dans lequel le dispositif de pulvérisation (10) présente une première tête de mélange (12) dotée d'une buse à jet plat (14) pour produire le jet pulvérisé plat en éventail pour une première application de matière (42) avec le mélange réactif sur le matériau support (41) et une seconde tête de mélange (11) dotée d'une buse à jet rond (15) pour produire le jet de pulvérisation rond (17) pour une seconde application de matière (43a, 43b, 43c) avec le mélange réactif sur le matériau support (41), dans lequel la buse à jet rond (15) est ainsi conçue que la seconde application de matière (43a, 43b, 43c) avec le mélange réactif peut être réalisée sur au moins une partie de la matière (42) appliquée sur le matériau support (41) lors de la première application de matière (42).

2. Dispositif selon la revendication 1, dans lequel la seconde tête de mélange (11) est dotée d'un système de dosage supplémentaire de fibres coaxial.

3. Dispositif selon la revendication 2, dans lequel le dispositif présente en outre une installation de découpe de fibres (13) appliquée sur le dispositif de pulvérisation.

4. Dispositif selon l'une des revendications précédentes, dans lequel le moyen de déplacement du dispositif de pulvérisation (10) est un robot (20).

5. Dispositif selon l'une des revendications précédentes, comprenant en outre un dispositif de réception pour recevoir le matériau support (41), dans lequel le dispositif de réception est ainsi conçu qu'une modification de position, en particulier un retournement du matériau support (41) est possible, de sorte qu'une application de matière des deux côtés sur le matériau support (41) est possible.

6. Procédé destiné à appliquer sur un matériau support (41) un mélange réactif constitué d'au moins deux composants, dans lequel une première application de matière (42) avec le mélange réactif sur le matériau support (41) a lieu avec un dispositif de pulvérisation (10) dans une première étape avec un jet pulvérisé plat en éventail et enfin, dans une étape supplémentaire, une application de matière (43a, 43b, 43c) supplémentaire avec le mélange réactif a lieu sur au moins une partie de la matière (42) appliquée sur le matériau support (41) lors de la première application de mélange avec un jet pulvérisé (17) essentiellement rond.

7. Procédé selon la revendication 6, dans lequel des fibres sont ajoutées au mélange dans la seconde étape.

8. Procédé selon la revendication 6 ou 7, dans lequel la seconde étape a lieu directement à la suite de la première étape, de sorte que la matière (42) appliquée lors de la première étape ne commence pas à durcir.

9. Procédé selon l'une des revendications 6 à 8, dans lequel on emploie une structure de renforcement en tant que matériau porteur (41).
